# EUROPÄISCHE PATENTANMELDUNG

(11) **EP 0 999 079 A2**
(43) Veröffentlichungstag der Anmeldung: **10.05.2000**
(21) Anmeldenummer: 99120205.2
(22) Anmeldetag: 09.10.1999
(51) Int. Cl.: B60J 7/04

(54) **Personenkraftwagen mit zu öffnendem Dach aus starren Dachteilen**

(30) Priorität: 06.11.1998 DE 19851231
(71) Anmelder: Bayerische Motoren Werke Aktiengesellschaft, 80809 München (DE)
(72) Erfinder: Minatti, Johann, 80935 München (DE)

(57) **Zusammenfassung**

Die Erfindung betrifft einen Personenkraftwagen mit einem in seitlichen Dachrahmen geführten und in den Heckbereich verfahrbaren starren Dachteil und mit einem zumindest teilweise absenkbaren Heckscheibenteil, das in seiner geschlossenen Position zwischen sog. C-Säulen-Abschnitten des Dachrahmens geführt ist. Erfindungsgemäß sind die separaten, das geschlossene Dachteil führenden sog. Dachteil-Abschnitte der seitlichen Dachrahmen bei im Heckbereich befindlichem Dachteil in den Bereich der C-Säulen-Abschnitte in eine von diesen verdeckte Position bringbar. Bevorzugt wird dabei der Dachteil-Abschnitt des seitlichen Dachrahmens von einem insbesondere rohrförmigen Führungsrahmen getragen, der im Bereich des C-Säulen-Abschnittes des Dachrahmens im wesentlichen in Fahrzeuglängsrichtung verschiebbar geführt ist. Dabei kann der Dachteil-Abschnitt des seitlichen Dachrahmens in eine Oberschale und eine Unterschale geteilt ausgeführt sein, die ausgehend von der das geschlossene Dachteil führenden Position zum Versenken derselben in Richtung auf den Führungsrahmen hin bewegbar sind.

## Beschreibung

Die Erfindung betrifft einen Personenkraftwagen mit einem in seitlichen Dachrahmen geführten und in den Heckbereich verfahrbaren starren Dachteil und mit einem zumindest teilweise absenkbaren Heckscheibenteil, das in seiner geschlossenen Position zwischen sog. C-Säulen-Abschnitten des Dachrahmens geführt ist. Zum technischen Umfeld wird lediglich beispielshalber auf die DE 37 21 895 A1 verwiesen.

Ein Personenkraftwagen nach dem Oberbegriff des Anspruchs 1 zeichnet sich durch eine große Variabilität aus, d.h. bei geeigneter Gestaltung kann einer derartiger PKW neben der (geschlossenen) Coupe-Form trotz des starren Dachteiles auch wie ein Cabriolet oder in der sog. Targa-Version gefahren werden. Problematisch ist jedoch der Umwandlungsprozess des Personenkraftwagens, im Verlaufe dessen die einzelnen unterschiedlich positionierbaren Elemente auf möglichst einfache Weise in die jeweils andere gewünschte Position gebracht werden müssen.

Eine im Hinblick auf diese geschilderte Problematik verbesserte Gestaltung eines Personenkraftwagens aufzuzeigen, ist Aufgabe der vorliegenden Erfindung.
Zur Lösung dieser Aufgabe sind separate, das geschlossene Dachteil führende sog. Dachteil-Abschnitte der seitlichen Dachrahmen bei im Heckbereich befindlichem Dachteil in den Bereich der C-Säulen-Abschnitte in eine von diesen verdeckte Position bringbar. Vorteilhafte Aus- und Weiterbildungen sind Inhalt der Unteransprüche.

Näher erläutert wird die Erfindung anhand bevorzugter Ausführungsbeispiele, die in den beigefügten Figuren jeweils stark vereinfacht und des besseren Verständnisses wegen größtenteils perspektivisch dargestellt sind. Im einzelnen zeigt
- Fig. 1: den oberhalb der Türbrüstungs-Linie eines erfindungsgemäßen PKW's liegenden Bereich, wobei sich das Dachteil und das Heckenscheibenteil in ihrer geschlossenen Position befinden,
- Fig. 2: diesen PKW-Bereich mit geöffnetem Heckenscheibenteil (in einer ersten Ausführungsform),
- Fig. 3: diesen PKW-Bereich mit zusätzlich geöffnetem Dachteil,
- Fig. 4: diesen PKW- Bereich mit zusätzlich in eine versenkte Position gebrachten sog. Dachteil-Abschnitten der seitlichen Dachrahmen,
- Fig. 5: eine Perspektivansicht des geschnitten dargestellten Dachrahmen-Dachteil-Abschnittes in der das geschlossene Dachteil führenden Position,
- Fig. 6: den ersten Schritt im Laufe der Versenkbewegung dieses Dachteil-Abschnittes des Dachrahmens,
- Fig. 7: den zweiten Schritt im Laufe der Versenkbewegung dieses Dachteil-Abschnittes des Dachrahmens,
- Fig. 8: den dritten und letzten Schritt im Laufe der Versenkbewegung dieses Dachteil-Abschnittes des Dachrahmens,
- Fig. 9: den Schnitt A-A aus Fig.1 durch den Dachrahmen bzw. den Dachteil-Abschnitt desselben in zweidimensionaler Darstellung,
- Fig. 10a: wieder in perspektivischer Darstellung den oberhalb der Türbrüstungs-Linie eines erfindungsgemäßen PKW's liegenden Bereich, wobei ausgehend vom Zustand nach Fig. 4 das Dachteil weiter abgesenkt wurde,
- Fig. 10b: eine vereinfachte Teil-Seitenansicht des PKW's im Zustand nach Fig.10a,
- Fig. 11: wieder in perspektivischer Darstellung den oberhalb der Türbrüstungs-Linie eines zweiten Ausführungsbeispieles eines erfindungsgemäßen PKW's liegenden Bereich im geschlossenen und somit der Darstellung nach Fig. 1 entsprechenden Zustand,
- Fig. 12: diesen PKW-Bereich nach Fig. 11 mit teilweise geöffnetem Heckenscheibenteil,
- Fig. 13a: den Schnitt B-B aus Fig. 11 durch den Dachrahmen bzw. durch den Dachteil-Abschnitt desselben in zweidimensionaler Darstellung, wobei sich der Dachteil-Abschnitt in der in Fig. 5 dargestellten Position befindet,
- Fig. 13b: eine Fig. 13a vergleichbare Darstellung, wobei sich der Dachteil-Abschnitt des Dachrahmens in der in Fig. 8 dargestellten Position befindet,
- Fig. 14: eine der Darstellung nach Fig.1 entsprechende Teilansicht mit den zugehörigen Stellantrieben.

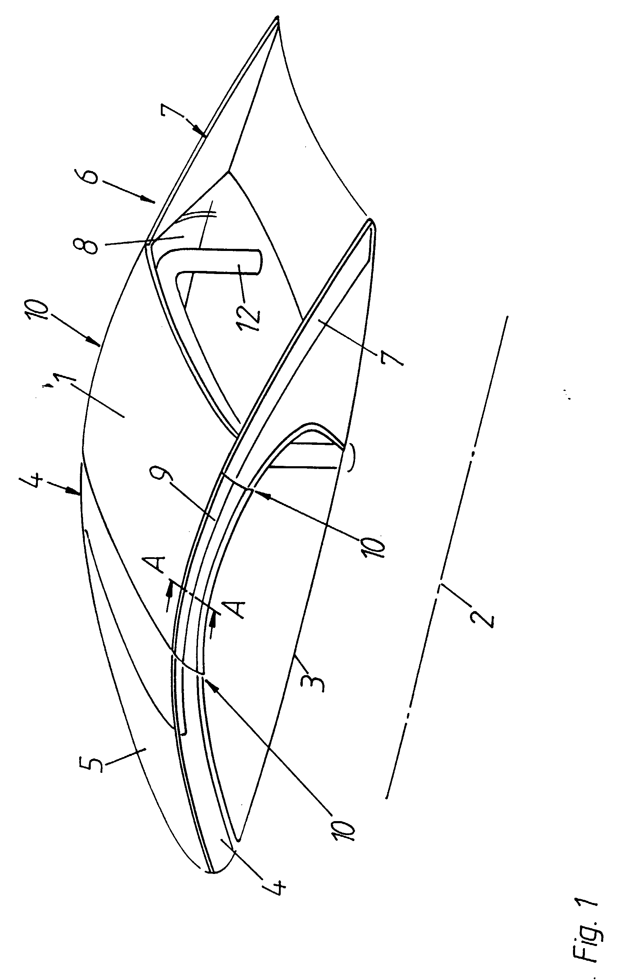

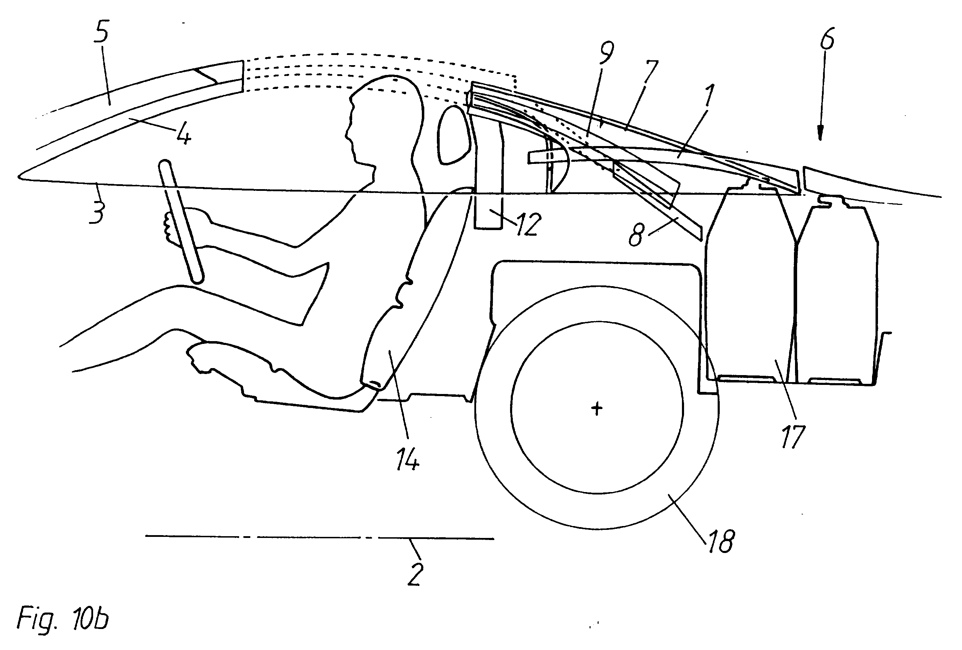

Mit der Bezugsziffer 1 ist das in Fahrzeuglängsrichtung 2 verschiebbare, in sich starre Dachteil eines Personenkraftwagens (PKW's) bezeichnet, der hier die grundsätzliche Form eines 2-sitzigen Coupés besitzt. Von diesem PKW ist in den meisten der Figuren (mit Ausnahme von **Fig.10b)** lediglich der Bereich oberhalb der Türbrüstungs-Linie 3 dargestellt. Wie üblich befinden sich in diesem Bereich linksseitig sowie rechtsseitig des PKW's neben den beiden A-Säulen bzw. A-Säulen-Abschnitten 4 im Frontbereich, die zwischen sich die Windschutzscheibe 5 einschließen, im Heckbereich 6 die beiden C-Säulen bzw. C-Säulen-Abschnitte 7. Zwischen diesen C-Säulen-Abschnitten 7 ist - zumindest in dessen geschlossener Position - ein sog. Heckscheibenteil 8, das zumindest teilweise absenkbar ist bzw. geöffnet werden kann, geführt. Zwischen den freien Enden der A-Säulen-Abschnitte 4 einerseits und denjenigen der C-Säulen-Abschnitte 7 andererseits befindet sich jeweils ein sog. Dachteil-Abschnitt 9 des Dachrahmens 10, d.h. linksseitig und rechtsseitig des PKW's wird der Dachrahmen 10 in seiner Gesamtheit durch den oberhalb der Türbrüstungs-Linie 3 liegenden A-Säulen-Abschnitt 4 der A-Säule, durch den Dachteil-Abschnitt 9, sowie durch den oberhalb der Türbrüstungs-Linie 3 liegenden C-Säulen-Abschnitt 7 der C-Säule gebildet. Die sog. Dachteil-Abschnitte 9 des linksseitigen sowie des rechtsseitigen Dachrahmens 10 führen dabei zwischen sich das Dachteil 1, wenn sich dieses in seiner (in **Fig.1** dargestellten) geschlossenen Position befindet. Im übrigen erkennt man in **Fig.1** auch einen ebenfalls in den meisten weiteren Figuren dargestellten, sich hinter den beiden Sitzen im Fahrzeug-Innenraum befindenden Überrollbügel 12.

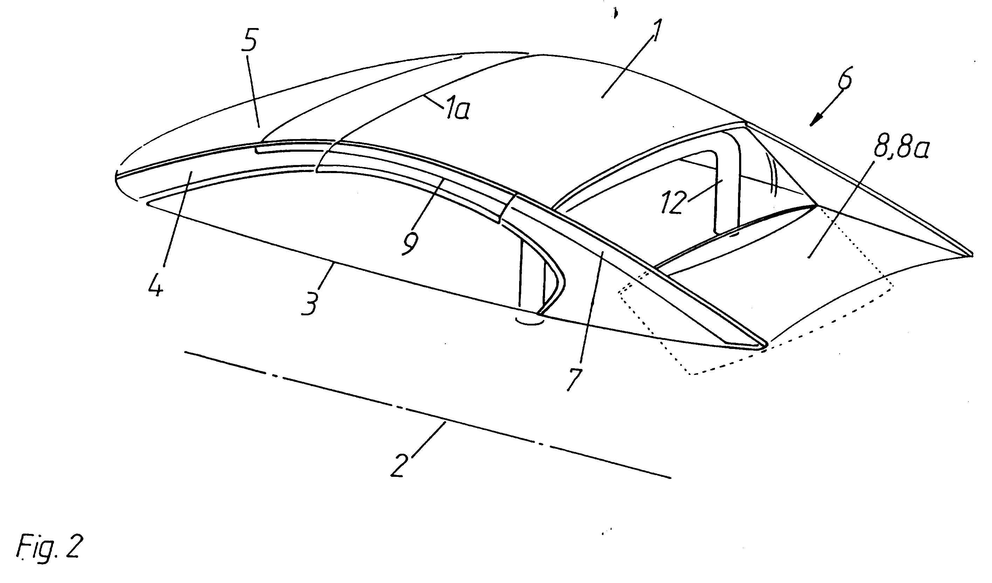

Ausgehend von dem in **Fig.1** dargestellten Zustand, bei welchem sich sowohl das Dachteil 1 als auch das Heckscheibenteil 8 in ihrer den Innenraum des PKW's gegenüber der Fahrzeugumgebung verschließenden (d.h. geschlossenen) Position befinden, kann nun zunächst das Heckscheibenteil 8 in eine zumindest teilweise abgesenkte und dabei zumindest teilweise geöffnete Position gebracht werden. **Fig.2** zeigt dies für eine erste Ausführungsform der Erfindung. Demnach ist das Heckscheibenteil 8 (bzw. hier die gesamte Heckscheibe 8a) in an den Innenseiten der C-Säulen-Abschnitte 7 vorgesehenen Führungsschienen weiter in Richtung des Heckbereiches 6 des PKW's vefahr- oder verlagerbar. Die Heckscheibe 8a bzw. das Heckscheibenteil 8 wird hierbei somit nach unten und gleichzeitig nach hinten verfahren, so daß die zuvor vom Heckscheibenteil 8 verschlossene Öffnung zwischen den C-Säulen-Abschnitten 7 hierdurch (zumindest teilweise) freigelegt wird. Die hierbei erzielbare Endposition des Heckscheibenteiles 8 ist im übrigen auch in **Fig.10b** ersichtlich.

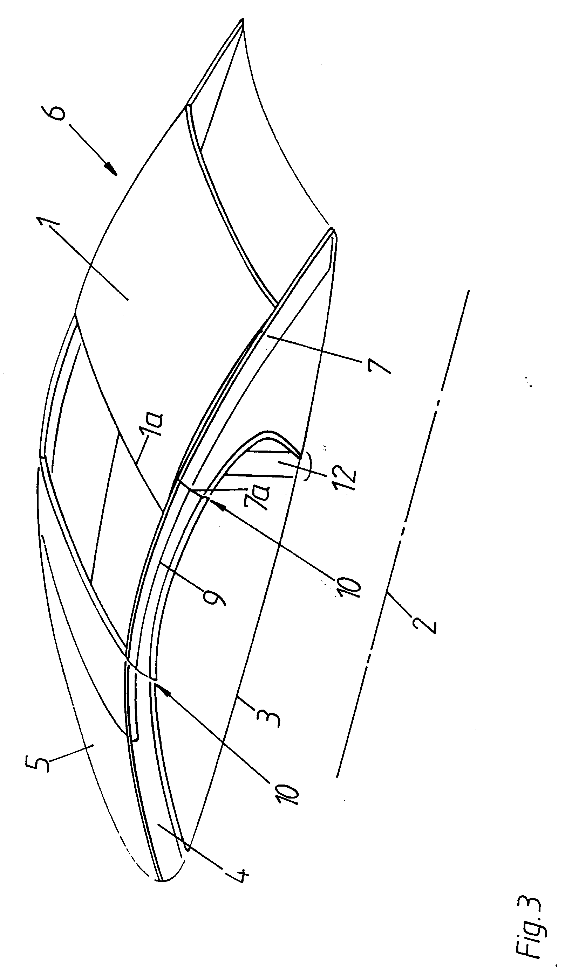

In einem nächsten Schrift kann nun das Dachteil 1 geöffnet werden. Durch einen Vergleich von **Fig.3** mit **Fig.2** wird ersichtlich, daß das Dachteil 1 hierzu ausgehend aus seiner geschlossenen Position in Fahrzeuglängsrichtung 2 nach hinten, d.h. in den Heckbereich 6 des PKW's verfahren wird. Diese Öffnungsbewegung kann sich selbstverständlich auch nur über einen Teil der hier dargestellten Wegstrecke erstrecken; hier gezeigt ist der relativ weite Öffnungszustand, in welchem die Vorderkante 1a des Dachteiles 1 auf der Höhe des freien Endes 7a des C-Säulen-Abschnittes 7 zum Liegen kommt. In diesem Zustand nach **Fig.3** ist der Dachrahmen 10 noch vollständig vorhanden, d.h. zwischen dem freien Ende 7a jedes C-Säulen-Abschnittes 7 und dem nicht näher bezeichneten freien Ende jedes A-Säulen-Abschnittes 4 befindet sich weiterhin der Dachteil-Abschnitt 9 des Dachrahmens 10.

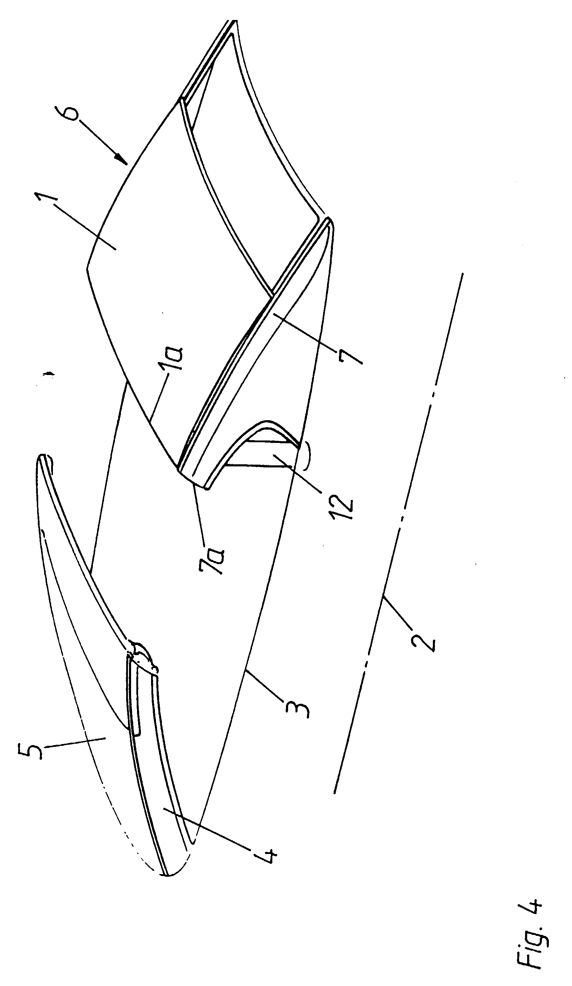

In einem weiteren Schrift, dessen Resultat in **Fig.4** dargestellt ist, sind nun auch die beiden Dachteil-Abschnitte 9 entfernbar, so daß die sog. Targa-Version des PKW's gebildet wird. Diese Dachteil-Abschnitte 9 sind dabei in den Bereich der C-Säulen-Abschnitte 7 bringbar, und zwar derart, daß der linksseitige Dachteil-Abschnitt 9 vom linksseitigen C-Säulen-Abschnitt 7 und der rechtsseitige Dachteil-Abschnitt 9 vom rechtsseitigen C-Säulen-Abschnitt 7 (jeweils nach außen hin) verdeckt wird.

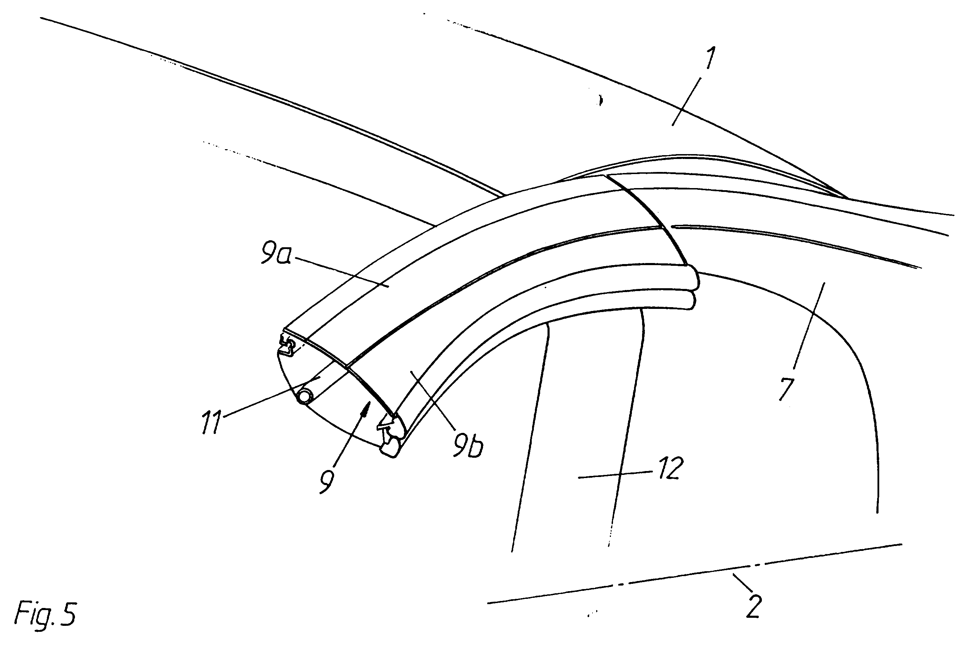

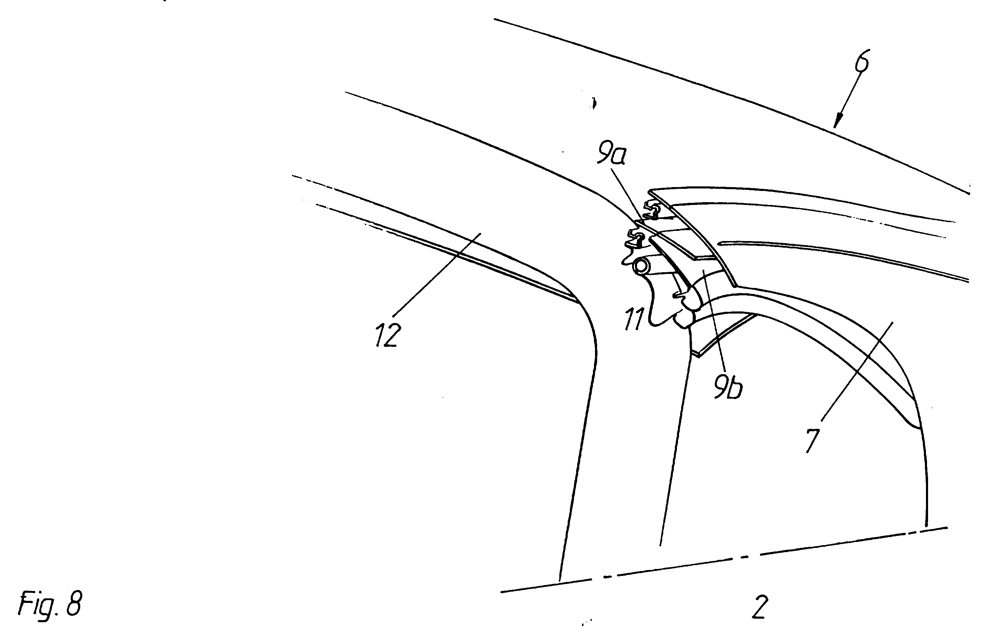

Dieser soeben genannte Übergang vom Zustand nach **Fig.3** in denjenigen nach **Fig.4** ist für den linksseitigen Dachteil-Abschnitt 9 des Dachrahmens 10 detaillierter in den im folgenden erläuterten **Figuren 5 bis 8** dargestellt. Die **Figuren 5 bis 7** zeigen dabei eine Perpsektivansicht von schräg vorne auf den abgeschnitten dargestellten Dachteil-Abschnitt 9, während dieser in **Fig.8** (von schräg vorne, d.h. gegen Fahrrichtung des PKW's betrachtet) vollständig hinter dem C-Säulen-Abschnitt 7 versenkt dargestellt ist.

Wie ersichtlich wird der Dachteil-Abschnitt 9 des seitlichen Dachrahmens 10 von einem insbesondere rohrförmigen Führungsrahmen 11 getragen, der seinerseits im Bereich des C-Säulen-Abschnittes 7 des Dachrahmens 10 im wesentlichen in Fahrzeuglängsrichtung 2 verschiebbar geführt ist. Der Einfachheit halber ist die letztgenannte Führung des Führungsrahmens 11 durch den C-Säulen-Abschnitt 7 nicht figürlich dargestellt. Wie ebenfalls ersichtlich ist, ist der Dachteil-Abschnitt 9 in eine Oberschale 9a und eine Unterschale 9b geteilt ausgeführt, die - wie im folgenden erläutert wird - ausgehend von der das geschlossene Dachteil 1 führenden und in **Fig.5** dargestellten Position zum Versenken derselben in Richtung auf den Führungsrahmen 11 hin bewegbar sind.

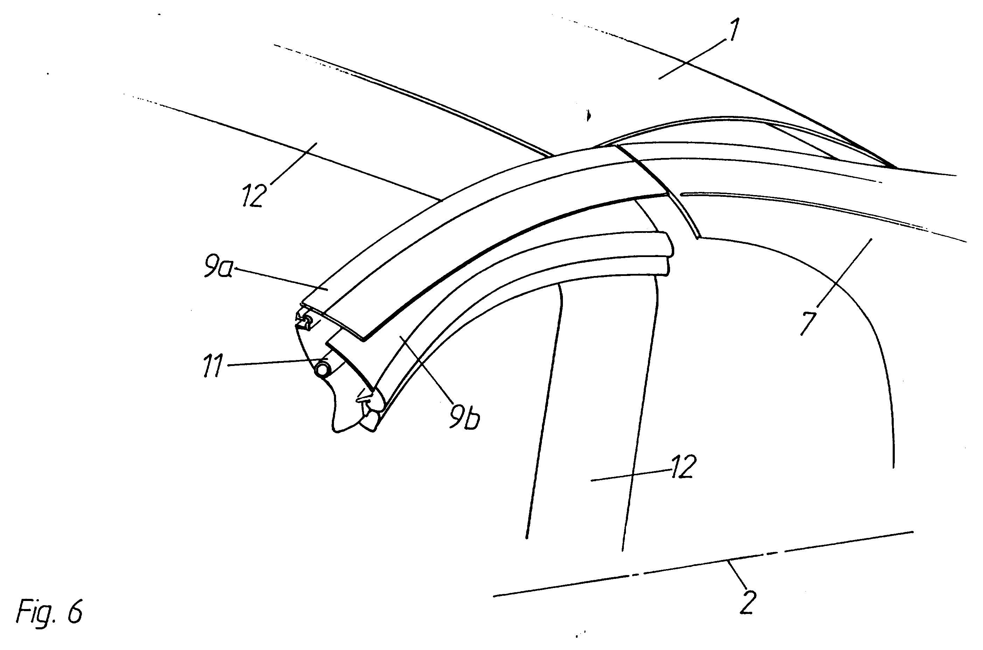

Der erste Schrift im Verlauf dieser genannten Versenkbewegung ist in **Fig.6** dargestellt. Hierbei wird zunächst die Unterschale 9b des Dachteil-Abschnittes 9 des Dachrahmens 10 quer zur Fahrzeuglängsrichtung 2 zum Führungsrahmen 11 hinbewegt, und zwar durch einen - der Übersichtlichkeit halber - nicht näher dargestellten Mechanismus, der im übrigen auch die Unterschale 9b trägt, d.h. dieser nicht gezeigte Mechanismus, der bspw. die Form eines Nockens besitzen kann, ist am Führungsrahmen 11 auf geeignete Weise befestigt und bewegt die Unterschale 9b mit einer geeignet initiierten Schwenkbewegung zum Führungsrahmen 11 hin.

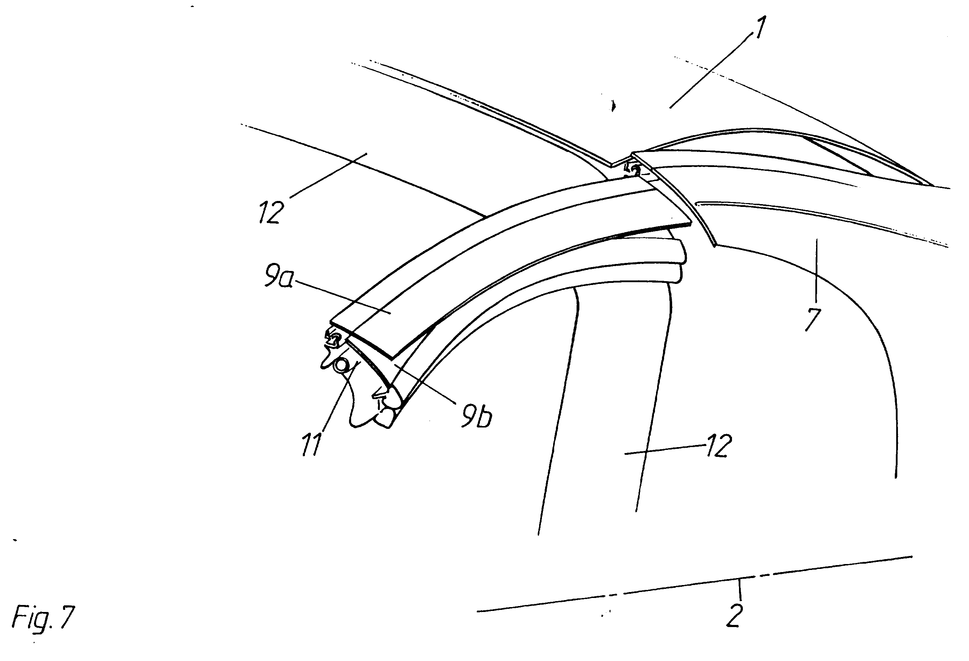

Der zweite Schrift im Verlauf der Versenkbewegung des DachteilAbschnittes 9 des Dachrahmens 10 ist in **Fig.7** dargestellt. Hierbei wird als nächstes die Oberschale 9a des Dachteil-Abschnittes 9 quer zur Fahrzeuglängsrichtung 2 zum Führungsrahmen 11 hinbewegt, und zwar bevorzugt durch einen ähnlichen - ebenfalls der Übersichtlichkeit halber - nicht näher dargestellten Mechanismus wie bei der Unterschale 9b. Auch dieser Mechanismus trägt demzufolge die Oberschale 9a, kann bspw. die Form eines Nockens besitzen und ist am Führungsrahmen 11 auf geeignete Weise befestigt, so daß er die Oberschale 9a mit einer geeignet initiierten Schwenkbewegung quer zur Fahrzeuglängsrichtung 2 zum Führungsrahmen 11 hinbewegt.

Nachdem nun sowohl die Oberschale 9a als auch die Unterschale 9b des Dachrahmen-Dachteil-Abschnittes 9 und somit dieser gesamte Dachteil-Abschnitt 9 gegenüber insbesondere dem C-Säulen-Abschnitt 7 in Relation zum Fahrzeug-Innenraum nach innen bewegt wurden, ist es im folgenden dritten und letzten Schritt nunmehr möglich, die Oberschale 9a und die Unterschale 9b in Fahrzeuglängsrichtung 2 nach hinten (d.h. zum Heckbereich 6 hin) in den Bereich des C-Säulen-Abschnittes 7 zu verfahren, und zwar selbstverständlich zusammen mit dem Führungsrahmen 11. **Fig.8** zeigt den damit erreichbaren Endzustand (dieser entspricht der bereits erläuterten Darstellung nach **Fig.4**), bei welchem sich der aus der Oberschale 9a sowie der Unterschale 9b bestehende Dachteil-Abschnitt 9 (zusammen mit dem Führungsrahmen 11) im Bereich des C-Säulen-Abschnittes 7 in einer von diesem verdeckten Position befindet.

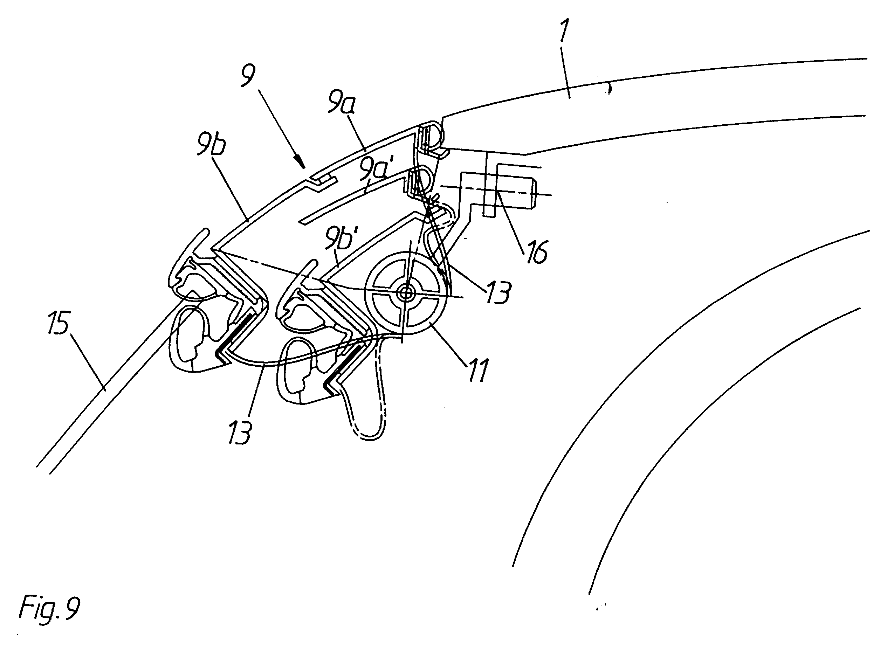

Die soeben anhand der **Figuren 5 bis 7** beschriebene Verschiebebewegung der Oberschale 9a und der Unterschale 9b des Dachteil-Abschnittes 9 wird im übrigen auch aus der im folgenden erläuterten **Fig.9** ersichtlich, die einen dem Schnitt A-A aus **Fig.1** entsprechenden Schnitt jedoch mit entgegengesetzter Blickrichtung, d.h. in Richtung des PKW-Frontbereiches, durch den linksseitigen Dachteil-Abschnitt 9 zeigt. Die Oberschale 9a sowie die Unterschale 9b sind dabei in ihren beiden Endpositionen dargestellt, wobei die quer zur Fahrzeuglängsrichtung 2 (diese ist hier senkrecht zur Zeichenebene) nach innen, d.h. zum Führungsrahmen 11 hin gefahrenen Positionen mit den Bezugsziffern 9a', 9b' bezeichnet sind. Im übrigen ist in **Fig.9** eine innenraumseitige Dachrahmen-Verkleidung mit der Bezugsziffer 13 bezeichnet. Daneben erkennt man in **Fig.9** eine im Bereich des Fahrersitzes (dieser ist in der später noch erläuterten **Fig.10b** mit der Bezugsziffer 14 bezeichnet) oberhalb der Türbrüstungs-Linie 3 vorgesehene Seitenscheibe 15.

Nachdem **Fig.9** darüber hinaus eine mögliche Variante zur Führung des Dachteiles 1 zeigt, sei zunächst kurz die bislang figürlich nicht näher dargestellte erste (und bevorzugte) Ausführungsform für die Führung des Dachteiles 1 beschrieben. Nach dieser Ausführungsform ist das Dachteil 1 im Bereich seiner Vorderkante 1a in einer an der Oberschale 9a des Dachrahmen-Dachteil-Abschnittes 9 vorgesehenen Führungsschiene (nicht gezeigt) geführt und mit seiner Hinterkante in einer ebenfalls nicht dargestellten Gleitbahn, die an der Innenseite des C-Säulen-Abschnittes 7 vorgesehen ist. Nach der alternativen in **Fig.9** dargestellten Variante hingegen ist das Dachteil 1 insbesondere im Bereich seiner Vorderkante 1a mit dem Führungsrahmen 11 um eine quer zur Fahrzeuglängsrichtung 2 verlaufende Drehachse 16 zumindest geringfügig drehbar verbunden. Dies hat zur Folge, daß der Führungsrahmen 11 zusammen mit dem Dachteil 1 nach hinten in den Heckbereich 6 des PKW's gefahren wird, so daß der eingangs erläuterte und in **Fig.3** dargestellte Zwischenzustand, bei welchem das Dachteil 1 bereits nach hinten verfahren ist, sich die Dachteil-Abschnitte 9 des Dachrahmens 10 jedoch noch zwischen den A-Säulen-Abschnitten 4 respektive C-Säulen-Abschnitten 7 befinden, hiermit nicht erzielbar ist.

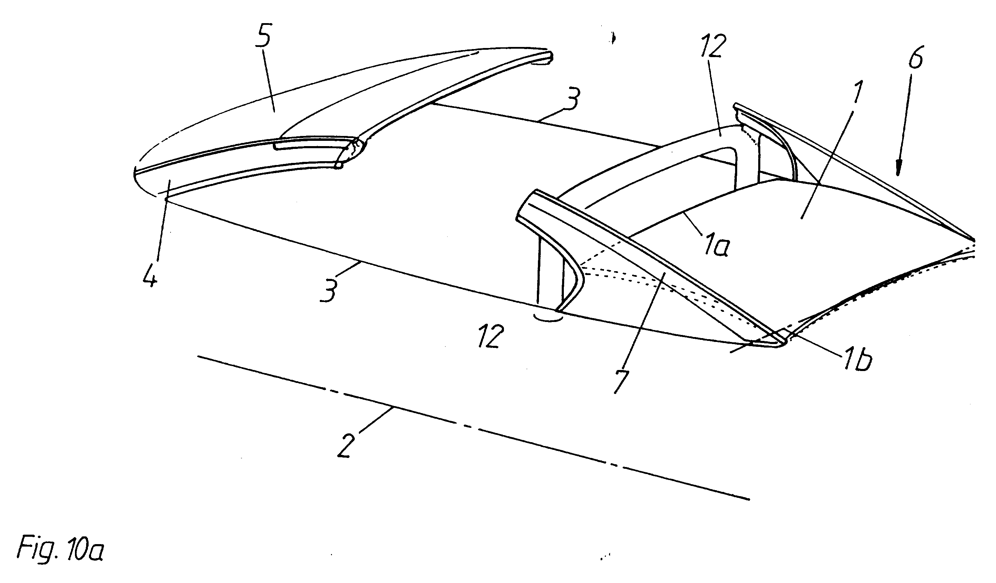

Zurückkommend auf das Gesamtkonzept des Personenkraftwagens werden im folgenden die **Figuren 10a, 10b** erläutert. Ausgehend vom in **Fig.4** dargestellten Zustand kann das Dachteil 1 daraufhin ausgehend von seiner in den Heckbereich 6 gefahrenen Position um eine im hinteren Endbereich desselben vorgesehene und quer zur Fahrzeuglängsrichtung 2 verlaufende Schwenkachse 1b mit seiner Vorderkante 1a in den Innenraum des Fahrzeuges hinein verschwenkt werden. Daß hiermit ein besonders angenehmes, offenes Fahrgefühl erzeugbar ist, liegt auf der Hand und wird aus der Darstellung von **Fig.10a** klar ersichtlich. **Fig.10b** zeigt im übrigen die dementsprechende Teil-Seitenansicht des PKW's. In dieser Teil-Seitenansicht sind neben den bereits erläuterten Elementen auch der Kofferraum 17 sowie das Hinterrad 18 des PKW's dargestellt. Besonders klar ersichtlich wird aber auch das entsprechend den bisherigen Erläuterungen abgesenkte Heckscheibenteil 8.

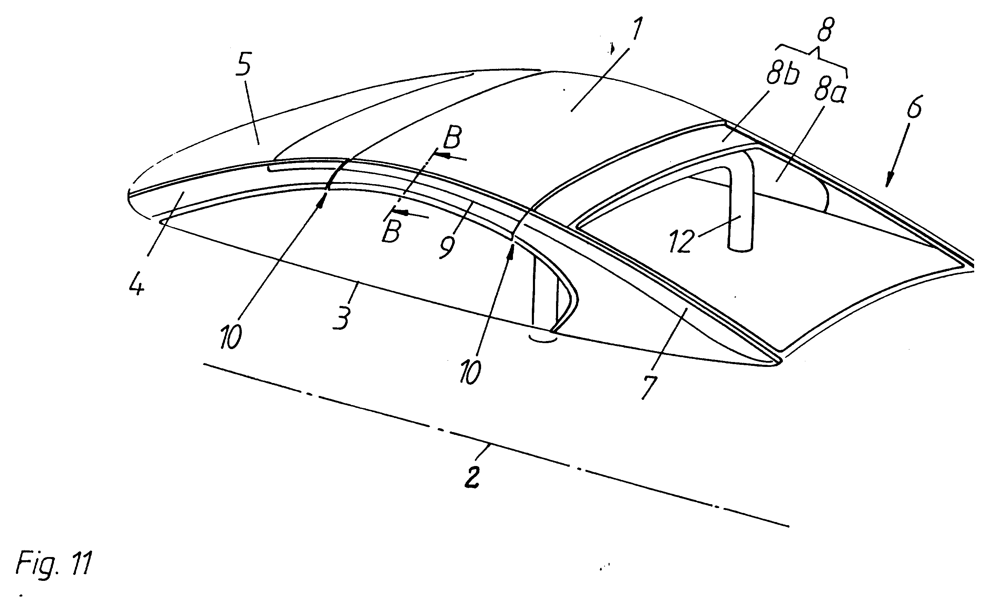

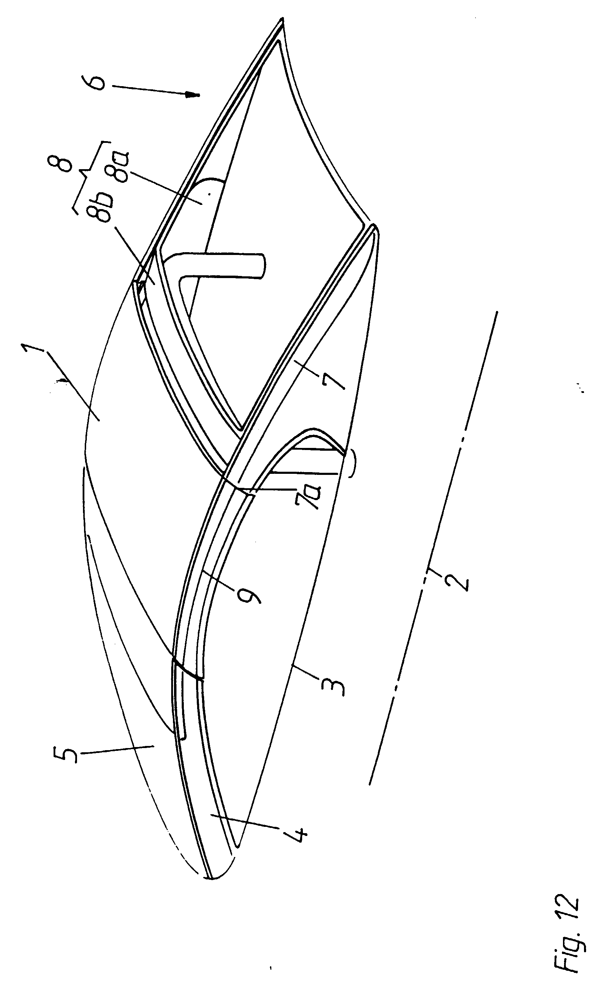

Eine Variante bezüglich dieses Heckscheibenteiles 8 zeigen die im folgenden erläuterten **Figuren 11, 12.** Demnach ist das Heckscheibenteil 8 in eine eigentliche Heckscheibe 8a sowie eine Lüfterklappe 8b geteilt ausgeführt, wobei die dem geschlossenen Dachteil 1 benachbarte Lüfterklappe 8b ausgehend von der in **Fig.11** dargestellten geschlossenen Position individuell in die in **Fig.12** dargestellte offene Position absenkbar ist. Dabei wird mit dieser Absenkbewegung nicht nur eine Belüftung des Fahrzeug-Innenraumes ermöglicht, sondern es wird hierbei gleichzeitig auch ein ausreichender Freiraum in der Höhe der freien Enden 7a der C-Säulen-Abschnitte 7 geschaffen, um anschließend daran das Dachteil 1 innerhalb dessen genannter Führungsbahn in den Heckbereich 6 verfahren zu können, wie dies i.V.m. **Fig.3** bereits erläutert wurde.

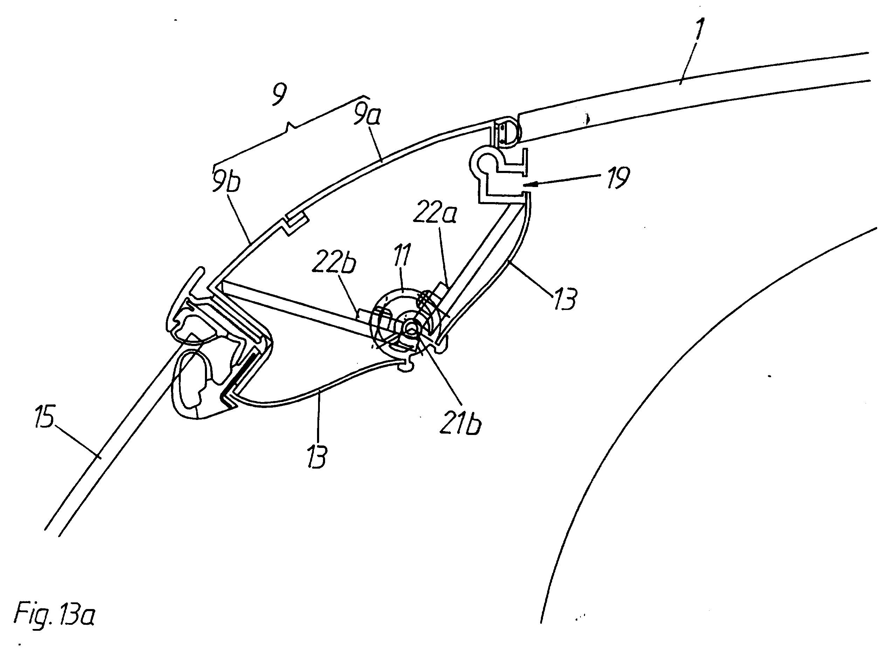

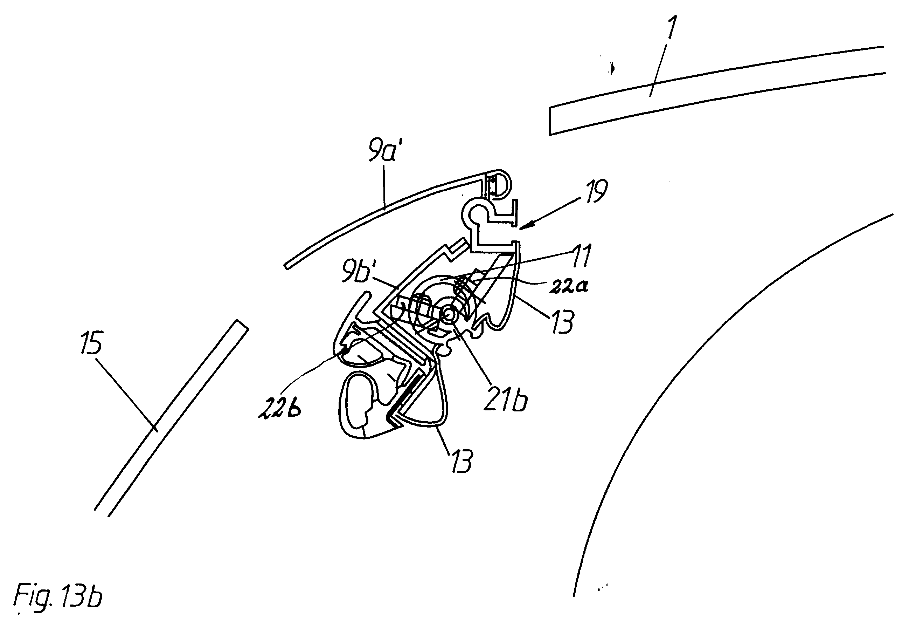

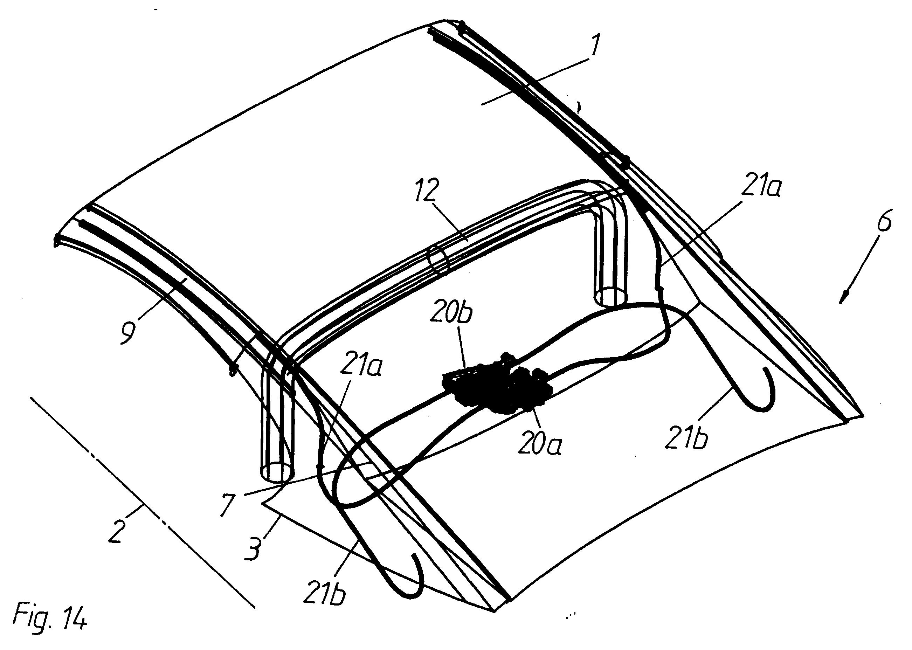

Die im folgenden erläuterten **Figuren 13a, 13b** sind in etwa der bereits erläuterten **Fig.9** vergleichbar und zeigen im wesentlichen den Schnitt B-B aus **Fig.11**. In diesen **Figuren 13a, 13b** erkennt man unter anderem die soeben genannte und mit der Bezugsziffer 19 versehene Führungsbahn für ein der Einfachheit halber nicht dargestelltes vorderes Gleitstück des Dachteiles 1, d.h. durch diese Führungsbahn 19 wird das Dachteil 1 im Bereich seiner Vorderkante 1a geführt. Diese Führungsbahn 19, die an der Oberschale 9a des Dachrahmen-Dachteil-Abschnittes 9 befestigt ist, enthält dabei - wie an sich üblich - auch einen nicht näher bezeichneten Führungskanal für ein Bürstenkabel, mit Hilfe dessen (von einem in **Fig.14** mit der Bezugsziffer 20a bezeichneten Stellantrieb angetrieben) die genannte Verschiebebewegung des Dachteiles 1 initiiert wird.

Ein weiteres solches Bürstenkabel 21b, das mit einem zweiten Stellantrieb 20b verbunden ist (vgl. auch hierzu **Fig.14**) läuft innerhalb des rohrförmigen Führungsrahmens 11, der stark vereinfacht ebenfalls in den **Figuren 13a**, **13b** dargestellt ist. Hier erkennt man auch die beiden bereits in Verbindung mit den **Figuren 6, 7** kurz erwähnten Mechanismen, die die Oberschale 9a bzw. die Unterschale 9b des Dachteil-Abschnittes 9 des Dachrahmens 10 tragen und wie bereits geschildert quer zur Fahrzeuglängsrichtung 2 (diese verläuft in den **Figuren 13a, 13b** senkrecht zur Zeichenebene) verschieben können. Diese beiden vorzugsweise nockenartigen Mechanismen 22a bzw. 22b sind mit der Oberschale 9a bzw. mit der Unterschale 9b verbunden und gleichzeitig drehbar am Führungsrahmen 11 gelagert, wobei sie mit dem darin längsverschiebbar geführten Bürstenkabel 21b kämmen. Ausgehend von der in **Fig.13a** dargestellten Position der Oberschale 9a und der Unterschale 9b, die derjenigen in der bereits erläuterten **Fig.5** entspricht, können diese Bestandteile des Dachteil-Abschnittes 9 des Dachrahmens 10 somit durch eine Rotationsbewegung der nockenartigen Mechanismen 22a und 22b in die **Fig.13b** dargestellte Position gebracht werden, die derjenigen in der bereits erläuterten **Fig.7** entspricht. Anschließend daran wird das Bürstenkabel 21b durch den Stellantrieb 20b in Längsrichtung verfahren, um die Oberschale 9a sowie die Unterschale 9b in die in **Fig.8** dargestellte Position zu bringen. Analog **Fig.9** ist die Oberschale in dieser Position in **Fig.13b** mit der Bezugsziffer 9a' und die Unterschale mit der Bezugsziffer 9b' bezeichnet. Für das Verständnis dieses Bewegungsablaufes sei noch angemerkt, daß das Bürstenkabel 21b zeitlich erst nach der geschilderten Absenkbewegung der Oberschale 9a sowie der Unterschale 9b mittels eines der Übersichtlichkeit wegen nicht dagestellten Koppelelementes eine Verbindung mit dem Führungsrahmen 11 eingeht, so daß dieser nach der vollendeten Absenkbewegung durch dieses Bürstenkabel 21b gemeinsam mit der Oberschale 9a und der Unterschale 9b in Richtung des Heckbereiches 6, genauer in den Bereich des jeweiligen C-Säulen-Abschnittes 7 verschoben wird. Bevor diese soeben genannte Ankoppelung des Bürstenkabels 21b an den Führungsrahmen 11 (mittels des nicht dargestellten Koppelelementes) erfolgt, wird hingegen der Führungsrahmen 11 durch einen (ebenfalls nicht dargestellten) Schloßmechanismus insbesondere an dessen vorderem Ende verriegelt gehalten.

Abschließend sei noch auf **Fig.14** verwiesen, die (vereinfacht) die Anordnung der beiden bereits genannten Stellantriebe 20a, 20b im Heckbereich 6 des PKW's zeigt. Vom ersten Stellantrieb 20a führen demnach zwei Bürstenkabel 21a zur linksseitigen respektive rechtsseitigen Führungsbahn 19, um - wie bereits erläutert - das Dachteil 1 in Fahrzeuglängsrichtung 2 zu verschieben. Dabei kann durch eine Verschiebebewegung dieser Bürstenkabel 21a auch die Absenkbewegung der Lüfterklappe 8b des Heckscheibenteiles 8 initiiert werden (vgl. hierzu **Figuren 11, 12,** jedoch dort der Übersichtlichkeit wegen nicht figürlich dargestellt). In vergleichbarer Weise führen vom zweiten Stellantrieb 20b zwei Bürstenkabel 21b in den bzw. zum linksseitigen respektive rechtsseitigen Führungsrahmen 11, um - wie bereits erläutert durch eine Verschiebebewegung dieser Bürstenkabel 21b die Oberschale 9a und die Unterschale 9b quer zur Fahrzeuglängsrichtung 2 zu verschieben bzw. den gesamten Dachteil-Abschnitt 9 des Dachrahmens 10 in Fahrzeuglängsrichtung 2 verfahren zu können.

Jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. So können bspw. das Dachteil 1, das Heckscheibenteil 8 sowie die oberhalb der Türbrüstungs-Linie 3 liegenden Abschnitte 4, 9, 7 der Dachrahmen 10 eine in ihrer Gesamtheit austauschbare Einheit bilden, d.h. die beschriebene sog. Dacheinheit, die oberhalb der Türbrüstungs-Linie 3 liegt, kann bspw. gegen ein Hardtop oder dgl. austauschbar sein.

### Bezugszeichenliste:

- 1: Dachteil
- 1a: Vorderkante von 1
- 1b: Schwenkachse im Bereich der Hinterkante von 1 (Fig. 10a)
- 2: Fahrzeuglängsrichtung
- 3: Türbrüstungs-Linie
- 4: A-Säulen-Abschnitt (von 10)
- 5: Windschutzscheibe
- 6: Heckbereich (des PKW's)
- 7: C-Säulen-Abschnitt (von 10)
- 7a: freies Ende von 7
- 8: Heckscheibenteil
- 8a: Heckscheibe
- 8b: Lüfterklappe (Fig. 11, 12)
- 9: Dachteil-Abschnitt (von 10)
- 9a: Oberschale (von 9)
- 9a': Oberschale in der zu 11 hin verfahrenen Position (Fig. 9, 13b)
- 9b: Unterschale (von 9)
- 9b': Unterschale in der zu 11 hin verfahrenen Position (Fig. 9, 13b)
- 10: Dachrahmen
- 11: (rohrförmiger) Führungsrahmen
- 12: Überrollbügel
- 13: Dachrahmen-Verkleidung
- 14: Fahrersitz
- 15: Seitenscheibe
- 16: Drehachse (der Dachteil-Befestigung in Fig. 9)
- 17: Kofferraum
- 18: Hinterrad
- 19: Führungsbahn (Fig. 13a, 13b)
- 20a: erster Stellantrieb (Fig. 14)
- 20b: zweiter Stellantrieb (Fig. 14)
- 21a: erstes Bürstenkabel (Fig. 14)
- 21b: zweites Bürstenkabel (Fig. 13a, 13b, 14)
- 22a: nockenartiger Mechanismus (für 9a in Fig. 13a, 13b)
- 22b: nockenartiger Mechanismus (für 9b in Fig. 13a, 13b)

## Patentansprüche

1. Personenkraftwagen mit einem in seitlichen Dachrahmen (10) geführten und in den Heckbereich (6) verfahrbaren Dachteil (1) und mit einem zumindest teilweise absenkbaren Heckscheibenteil (8), das in seiner geschlossenen Position zwischen sog. C-Säulen-Abschnitten (7) des Dachrahmens (10) geführt ist,
wobei separate, das geschlossene Dachteil (1) führende sog. Dachteil-Abschnitte (9) der seitlichen Dachrahmen (10) bei im Heckbereich (6) befindlichem Dachteil (1) in den Bereich der C-Säulen-Abschnitte (7) in eine von diesen verdeckte Position bringbar sind.

2. Personenkraftwagen nach Anspruch 1,
dadurch gekennzeichnet, daß der Dachteil-Abschnitt (9) des seitlichen Dachrahmens (10) von einem insbesondere rohrförmigen Führungsrahmen (11) getragen wird, der im Bereich des C-Säulen-Abschnittes (7) des Dachrahmens (10) im wesentlichen in Fahrzeuglängsrichtung (2) verschiebbar geführt ist.

3. Personenkraftwagen nach Anspruch 1 oder 2,
dadurch gekennzeichnet, daß der Dachteil-Abschnitt (9) des seitlichen Dachrahmens (10) in eine Oberschale (9a) und eine Unterschale (9b) geteilt ausgeführt ist, die ausgehend von der das geschlossene Dachteil (1) führenden Position zum Versenken derselben in Richtung auf den Führungsrahmen (11) hin bewegbar sind.

4. Personenkraftwagen nach einem der vorangegangenen Ansprüche,
dadurch gekennzeichnet, daß das Dachteil (1) im Bereich seiner Vorderkante (1a) in einer an der Oberschale (9a) vorgesehenen Führungsbahn (19) geführt ist.

5. Personenkraftwagen nach einem der vorangegangenen Ansprüche,
dadurch gekennzeichnet, daß das Dachteil (1) im Bereich seiner Vorderkante (1) mit dem Führungsrahmen (11) geringfügig drehbar verbunden ist.

6. Personenkraftwagen nach einem der vorangegangenen Ansprüche,
dadurch gekennzeichnet, daß das Heckenscheibenteil (8) in eine
Heckscheibe (8a) sowie eine Lüfterklappe (8b) geteilt ausgeführt ist, wobei die dem geschlossenen Dachteil (1) benachbarte Lüfterklappe (8b) individuell absenkbar ist.

7. Personenkraftwagen nach einem der vorangegangenen Ansprüche,
dadurch gekennzeichnet, daß das Heckscheibenteil (8) ausgehend von seiner geschlossenen Position weiter in den Heckbereich (6) des Fahrzeuges verfahrbar ist.

8. Personenkraftwagen nach einem der vorangegangenen Ansprüche,
dadurch gekennzeichnet, daß das Dachteil (1) ausgehend von seiner in den Heckbereich (6) gefahrenen Position um eine im hinteren Endbereich desselben vorgesehene Schwenkachse (1b) in den Innenraum des Fahrzeuges verschwenkbar ist.

9. Personenkraftwagen nach einem der vorangegangenen Ansprüche,
dadurch gekennzeichnet, daß das Dachteil (1), das Heckscheibenteii (8) sowie die oberhalb der Türbrüstungs-Linie (3) liegenden Abschnitte (4, 9, 7) der Dachrahmen (10) eine in ihrer Gesamtheit austauschbare Einheit bilden.
